# EUROPÄISCHE PATENTSCHRIFT

(11) **EP 1 675 311 B1**
(45) Veröffentlichungstag und Bekanntmachung des Hinweises auf die Patenterteilung: **03.09.2008**
(21) Anmeldenummer: 05025868.0
(22) Anmeldetag: 28.11.2005
(51) Int. Cl.: H04L 12/40

(54) **Verfahren zur Übertragung kurzer Datentelegramme via eines Feldbusses**
Method of transfer of data telegrams via a fieldbus
Méthode de transfert de télégrammes de données par bus de terrain

(30) Priorität: 21.12.2004 DE 102004062683
(43) Veröffentlichungstag der Anmeldung: 28.06.2006
(73) Patentinhaber: Bosch Rexroth AG, 70184 Stuttgart (DE)
(72) Erfinder: Schultze, Stephan, 97816 Lohr am Main (DE); Kynast, Rigobert, 97816 Lohr am Main (DE); Leurs, Ludwig, 97816 Lohr am Main (DE); Schmid, Thomas, 97840 Hafenlohr (DE)

(56) Entgegenhaltungen:
- EP-A- 1 312 992
- FR-A- 2 823 933
- US-A1- 2004 054 829
- US-B1- 6 728 892
- STEVENS W R ED - STEVENS ET AL: "TCP/IP Illustrated, IP FRAGMENTATION" TCP/IP ILLUSTRATED. VOL. 1 : THE PROTOCOLS, PROFESSIONAL COMPUTING SERIES, READING, MA : ADDISON WESLEY, US, Bd. VOL. 1, 1994, Seiten 148-151, XP002264955 ISBN: 0-201-63346-9

## Beschreibung

Die vorliegende Erfindung betrifft ein Verfahren zur Regelung einer Übertragung einer Menge zu übertragender Nutzdaten zwischen mehreren Teilnehmern eines Kommunikationssystems über ein Feldbussystem mittels Datentelegrammen. Ferner umfasst die vorliegende Erfindung ein entsprechendes Kommunikationssystem, ein Computerprogramm und ein Computerprogrammprodukt.

In einem Kommunikationssystem mit zyklischer Kommunikation werden Datentelegramme zwischen Teilnehmern bzw. entsprechenden Stationen ausgetauscht.

Bei einer zyklischen Kommunikation wird,beispielsweise von einem als Master charakterisierten Teilnehmer zyklisch ein sogenanntes Synchronisationstelegramm (MST- Master-Synchronisation-Telegramm), das immer in festen Zeitabständen erzeugt wird, gesendet. Durch ein derartiges Synchronisationstelegramm, das auch in einem sogenannten Master-Datentelegramm eingebettet sein kann, wird in jedem anderen als Slave charakterisierten Teilnehmer des Systems eine Zeitsteuerung gestartet. Nach Ablauf der in der Initialisierung festgelegten Zeit sendet jeder Teilnehmer sein Telegramm, auch als Antriebstelegramm (AT) bezeichnet, an den Master. Am Ende eines derartigen Zyklus sendet beispielsweise der Master ein Masterdatentelegramm (MDT) als Broadcast, das sämtliche Daten für alle Slaves enthält, aus. Aus der Initialisierung heraus kennt dabei jeder Slave die Lage der an ihn adressierten Daten innerhalb des Masterdatentelegramms. Alternativ kann jedoch, wie bereits angedeutet, das Synchronisationstelegramm in dem Masterdatentelegramm eingebettet sein, welches dann gleich zu Beginn eines Zyklus als Broadcast gesendet wird.

Bei einem dabei verwendeten Kommunikationssystem kann es sich beispielsweise um ein sogenanntes Ethernet handeln. Ein Ethernet ist eine rahmenbasierte Computer-Vernetzungstechnologie für lokale Netzwerke, wie beispielsweise sogenannte LANs (Local Area Network). Dabei werden Kabeltypen und Signalisierung für eine Bitübertragungsschicht (physikalische Schicht), und Paketformate und Protokolle für eine Medienzugriffskontrolle/Sicherungsschicht des sogenannten OSI-Modells definiert. Das Ethernet ist weitestgehend in der IEEE-Norm 802.3 standardisiert. Das Ethernet basiert auf der Idee, dass alle Teilnehmer eines Netzwerks Nachrichten durch eine Art Funk-System versenden, allerdings nur innerhalb eines gemeinsamen Leitungsnetzes. Jeder Teilnehmer hat einen global eindeutigen 48-Bit-Schlüssel, der als seine MAC-Adresse bezeichnet wird. Die gesamte Kommunikation innerhalb des Kommunikationssystem passiert auf derselben Leitung. Das bedeutet, dass jede Information bzw. alle Daten, die von einem Computer bzw. einem Teilnehmer gesendet wurde, von allen anderen Teilnehmern empfangen wird bzw. werden kann. Diese Tatsache kann von Protokollen auf höheren Schichten genutzt werden, um Broadcast-Nachrichten an alle angeschlossenen Teilnehmer zu senden. Derzeit gibt es vier Typen von sogenannten Ethernet-Frames. Die unterschiedlichen Frame-Typen haben unterschiedliche Format- und Paketgrößen, können aber auf Idemselben physischen Medium parallel verwendet werden. Innerhalb des Ethernets gibt es für alle verwendbaren Ethernet-Frames vorgegebene maximale Paketlängen bzw. Telegrammgrößen, was als MTU (maximum transmission unit) bezeichnet wird. Diese Telegrammgröße beträgt ca. 1.500 Byte, was die in einem Telegramm übertragbare Information limitiert.

Ein vorstellbares Ausführungsbeispiel ist beispielsweise eine Haupt- und mehrere Nebenstationen. Datentelegramme können dabei aus Effizienzgründen als sogenannte Sammeltelegramme gesendet werden, bei denen Daten für mehrere Nebenstationen in einem Telegramm enthalten sind. Jede adressierte Nebenstation weiß dabei, wo die für sie bestimmte Information im Sammeltelegramm enthalten ist. Dabei sind die.Haupt- und die mehreren Nebenstationen meist über ein sogenanntes Feldbussystem miteinander verbunden. Der Feldbus ersetzt parallele Leitungsbündel durch ein einziges Buskabel und verbindet dabei alle Ebenen und alle am System angeschlossenen Komponenten. Dabei können die Komponenten des Systems beliebig im Feld verteilt sein, denn alle werden dezeritral vor Ort angeschlossen.

Datentelegramme, über welche die Daten versendet werden, enthalten mindestens eine Zieladresse, eine Quelladresse und ein Feld für zu übertragende Nutzdaten. Bei einer zyklischen Kommunikation ist es ferner notwendig, eine Synchronisation durchzuführen bzw. zu gewährleisten. Eine dazu notwendige Synchronisationsinformation kann, wie bereits erwähnt, über ein Synchronisationstelegramm gesondert gesendet werden. Alternativ dazu kann ein derartiges sogenanntes Master-Synchronisation-Telegramm (MST) in ein Datenfeld eines normalen Datentelegramms eingebettet werden. Jeder Kommünikatiönszyklüs hat eine bestimmte Zeitdauer, innerhalb welcher Datentelegramme zwischen dem Haupt- und den mehreren Nebenstationen gesendet werden. Die Hauptstation sendet beispielsweise ein sogenanntes Masterdatentelegramm (MDT) als Sammeltelegramm mit eingebetteter Synchronisationsinformation MST an alle mit dem System verbundenen Nebenstationen. Im MDT können beispielsweise Sollwerte enthalten sein. Jede adressierte Nebenstation weiß dabei, wo die für sie bestimmte Information innerhalb des Sammeltelegramms hinterlegt ist. Die einzelnen Nebenstationen können nunmehr über ein sogenanntes Äntriebstelegramm (AT), welches beispielsweise Istwerte enthält, mit der Hauptstation kommunizieren. Möglicherweise kann auch ein IP-Kanal in einem Kommunikationszyklus enthalten sein. Ein nachfolgender Kommunikationszyklus startet dann wieder mit einem MDT als Sammeltelegramm. Die dabei verwendeten Datentelegramme besitzen eine "Über-alles-Prüfsumme", auch als FCS (frame check sequence) bezeichnet, welche üblicherweise am Ende eines Telegramms vorgesehen ist. Die Gültigkeit des gesamten Datentelegramms wird nach Empfang desselben mittels dieser FCS geprüft. Ferner sind in einem MDT als Sammeltelegramm im Ansatz mehrere Datenfelder für verschiedene Empfangsstationen enthalten. Diese können beispielsweise einfach ohne Lücken hintereinander in ein Telegramm gepackt werden. Nachteilig dabei ist, dass bei einer Begrenzung der maximalen Telegrammlänge, wie beispielsweise beim Ethernet, die maximal übertragbaren Nutzdaten begrenzt werden.

Bisher ist noch kein Verfahren spezifiziert, wie eine Übertragung von Daten, die nicht mittels eines einzigen Telegramms übertragen werden können, gehandhabt wird. Dies ist jedoch beispielsweise von besonderer Bedeutung bei zukünftigen Ethernet-Anwendungen mit großer Bandbreite, wo zu erwarten ist, dass die Menge von zu übertragenden Daten größer als die bereits erwähnte MTU pro Telegramm sein wird.

Die Druckschrift US 6 728 892 P1 betrifft ein Verfahren zur Leistungseinsparung in einen CAN Microcontroller sowie einen CAN Microcontroller zur Durchführung dieses Verfahrens. Innerhalb dieser Druckschrift wird unter anderem eine fragmentierte oder segmentierte Datenübertragung beschrieben. Hierzu ist im Detail ausgeführt, dass eine Nachricht in mehrere Pakete aufgeteilt wird, wobei jedes Patent einzeln übertragen wird, und wobei jedes Paket als einzelner CAN-Rahmen bzw. Frame mit einer Datenlänge von maximal acht Datenbytes ausgebildet ist. Außerdem ist vorgesehen, dass ein sog. XAC3 Microcontroller die voranstehend beschriebenen Pakete zu der ursprünglichen Nachricht zusammenfügt. Sobald ein derartiges Zusammenfügen abgeschlossen ist, meldet der XAC3 Microcontroller, dass die vollständige, nunmehr wieder zusammengefügte Nachricht zur Verfügung steht. Demnach werden die Pakete voneinander getrennt übermittelt.

Ein weiterer Stand der Technik ist in einem Artikel von Stevens et al. mit dem Titel "TCP/IP Illustrated IP Fragmentation". TCP/IP Illustrated. Vol. 1, The Protocols, Professional Computing Series, Reading, MA: Addison Wesley, US Bd. Vol. 1, 1994, S. 148-151 offenbart. In diesem Artikel wird eine IP- und somit Internetprotokoll-fragmentierung beschrieben. Dabei ist unter anderem vorgesehen, dass das Internetprotokoll eine MTU (Maximal Transmission Unit) mit einer Größe eines Datagramms vergleicht und dann bedarfsweise eine Fragmentierung vornimmt. Falls ein IT-Datagramm fragmentiert ist, wird es erst wieder zusammengesetzt, sobald es einen Zielort erreicht hat. Weiterhin ist vorgesehen, dass jedes Fragment eines fragmentierten IP-Datagramms ein eigenes Paket mit einem eigenen IP-Header bildet und unabhängig von den anderen Paketen übermittelt wird. Durch diese Maßnahme wird erreicht, dass die Fragmente des Datagramms den Zielort in beliebiger Reihenfolge erreichen können. Da die Datagramme jedoch genügend Informationen in den IP-Headern aufweisen, kann ein Empfänger diese Fragmente bzw. Pakete wieder in korrekter Reihenfolge zusammenfügen.

Ein System zum Austausch von Informationen zwischen einzelnen Teilnehmern eines Datennetzes, insbesondere in einem Kraftfahrzeug, ist in der Druckschrift FR 2 823 933 A1 beschrieben. Hier umfasst eine Nachricht einen Header sowie Daten. Diese ursprünglichen Daten werden in elementare Daten aufgeteilt. Zum Übertragen der Nachricht ist vorgesehen, dass zunächst der Header, und danach zueinander versetzt die elementaren Daten und am Ende ein abschließender Datenblock übermittelt wird.

Vor dem Hintergrund des genannten Standes der Technik schlägt die vorliegende Erfindung nunmehr ein Verfahren zur Regelung einer Übertragung einer Menge zu übertragender Nutzdaten zwischen mehreren Teilnehmern eines Kommunikationssystems über ein Feldbussystem mit den Merkmalen von Patentanspruch 1 vor. Ferner umfasst die vorliegende Erfindung ein Computerprogramm mit den Merkmalen von Patentanspruch 13, ein Computerprogrammprodukt mit Programmcode mit den Merkmalen von Patentanspruch 14 und ein Kommunikationssystem mit mehreren Teilnehmern und einem Feldbussystem mit den Merkmalen von Patentanspruch 16.

Gemäß Patentanspruch 1 der vorliegenden Erfindung wird ein Verfahren zur Regelung einer Übertragung einer Menge zu übertragender Nutzdaten zwischen mehreren Teilnehmern eines Kommunikationssystems über ein Feldbussystem bereitgestellt, bei dem die einzelnen Teilnehmer über Datentelegramme kommunizieren, die jeweils mindestens eine Zieladresse, eine Quelladresse und eine eine vorgegebene maximale Menge nicht überschreitende Menge an Nutzdaten enthalten, wobei im Falle, dass die für ein Datentelegramm vorgegebene Menge an Nutzdaten kleiner ist als die Menge zu übertragender Nutzdaten, die Menge zu übertragender Nutzdaten auf mehrere Teil-Telegramme fragmentiert und die jeweiligen Teil-Telegramme in einer Folge von Teil-Telegrammen steuerbar hintereinander gesendet werden.

In einer möglichen Ausführungsform des erfindungsgemäßen Verfahrens wird eine Unterscheidung der jeweiligen Teil-Telegramme innerhalb der Folge von Teil-Telegrammen anhand einer Telegrammkennung durchgeführt. Das bedeutet, dass ein zu übertragender Datenblock bzw. eine Menge von zu übertragenden Nutzdaten auf mehrere Teil-Telegramme zerlegt wird und hintereinander übertragen wird. Durch das Vorsehen von derartigen Teil-Telegrammen kann die durch eine MTU vorgegebene Limitierung hinsichtlich übertragbarer Information bzw. Nutzdaten überwunden werden.

Das bedeutet, dass im Falle, dass zur Übertragung von Nutzdaten für ein MDT bzw. ein AT eine vorgegebene MTU, wie beispielsweise eine MTU von 1.500 Byte im Falle eines Ethernets nicht ausreicht, die Nutzdaten auf mehrere Teil-Telegramme fragmentiert und bspw. direkt hintereinander versendet werden. Eine Unterscheidung zwischen erstem Teil-Telegramm und Folgetelegrammen wird anhand einer Telegrammkennung durchgeführt. Eine derartige Telegrammkennung kann in einem beliebigen Feld "telegram type" vorgesehen bzw. hinterlegt werden.

In einer weiteren möglichen Ausführungsform des erfindungsgemäßen Verfahrens werden die Teil-Telegramme innerhalb der Folge der Teil-Telegramme logisch aneinandergehängt, so dass die Folge der Teil-Telegramme für einen sendenden und/oder einen empfangenden Teilnehmer des Kommunikationssystems als ein einziges Datentelegrämm erscheint. D.h., dass die Nutzdaten der Teil-Telegramme der Folge für einen sendenden bzw. einen empfangenden Teilnehmer logisch aneinandergehängt werden als wäre es ein einziges längeres Telegramm.

Dabei ist es denkbar, dass ein empfangender Teilnehmer anhand eines in ihm hinterlegten sogenannten "Offsets" automatisch an ihn adressierte Teil-Telegramme aus der Folge der Teil-Telegramme herausfiltern kann. Ein Teilnehmer muss also nicht zwingend alle Telegramme der Folge von Teil-Telegrammen empfangen und auswerten.

In einer weiteren möglichen Ausführungsform des erfindungsgemäßen Verfahrens werden alle an einen Empfänger zu sendende Nutzdaten innerhalb eines einzigen Teil-Telegramms abgelegt und übertragen. Das bedeutet, dass im Falle,'wenn ein Datenfeld eines Empfängers über die vorgegebene, Menge an übertragbaren Nutzdaten eines Teil-Telegramms hinausgeht, der Beginn dieses Datenfeldes mittels Füllinformation am Ende des Teil-Telegramms auf ein nachfolgendes Teil-Telegramm "verschoben" werden kann. Diese Vorgehensweise wird auch als "padding" bezeichnet. Hierdurch sind eventuell einfachere Verarbeitungsalgorithmen in den Teilnehmern möglich. Beispielsweise können somit die für einen Teilnehmer bestimmten Nutzdaten an einem Block kopiert werden. Ein Datenfeld, das normalerweise beispielsweise bei einem Offset 1.498 ... 1.508 liegt, kann bei einer MTU von 1.500 Byte auf 1.500 ... 1.510 verschoben werden. Ein derartiges Padding mit Füllinformation am Ende der Teil-Telegramme ist gegebenenfalls nicht nötig, wenn jeder Teilnehmer die genaue Länge der einzelnen Teil-Telegramme kennt.

In einer weiteren möglichen Ausführungsform des erfindungsgemäßen Verfahrens wird im Falle eines zyklischen synchronisierenden Kommunikationssystems ein Teil-Telegramm der Folge der Teil-Telegramme als synchronisierendes Telegramm ausgewählt, als solches kenntlich gemacht und allen Teilnehmern des Kommunikationssystems als solches kommuniziert. Das bedeutet, dass im Falle eines zyklisch synchronisierenden Kommunikationssystems Synchronisationsinformationen einmalig pro Kommunikationszyklus gesendet werden. Die Synchronisationsinformation wird dabei in einem, wie bereits erwähnt, sogenannten MST-Datenfeld des entsprechenden Teil-Telegramms hinterlegt. Das als synchronisierendes Teil-Telegramm ausgewählte Telegramm wird beispielsweise über das.Feld "telegram type" als solches kenntlich gemacht. Diese getroffene Vereinbarung muss allen Teilnehmern bekannt bzw. kommuniziert werden. Dies kann beispielsweise entweder über eine globale Vereinbarung oder über eine Initialisierung festgelegt werden. Vorteilhafterweise synchronisiert das erste Folgetelegramm der Folge der Teil-Telegramme. Optional kann das im allgemeinen vorgesehene MST-Datenfeld der anderen verbleibenden Folgetelegramme wegfallen.

In einer weiteren Ausführungsform des erfindurigsgemäßen Verfahrens werden für die einzelnen Teil-Telegramme einzelne Sendezeiten vorgegeben. Dabei ist es denkbar, dass die einzelnen Teil-Telegramme der Folge von Teil-Telegrammen zu direkt hintereinander liegenden Sendezeiten gesendet werden, ohne dass weitere Telegramme dazwischen liegen. Dies erfolgt unter Berücksichtigung systemabhängiger Mindest-Telegramm-Abständen.

Alternativ kann jedoch auch eine Erkennung der Teil-Telegramme anhand der Telegrammkennung bei beliebiger Sendereihenfolge durchgeführt werden. Man spricht dabei von einer Erkennung "on-the-fly".

Ferner kann auch eine Vorgabe der Sendezeiten der einzelnen Teil-Telegramme kommuniziert werden, so dass die Teilnehmer über den Empfangszeitpunkt die einzelnen Teil-Telegramme zuordnen können.

Es ist denkbar, dass das Kommunikationssystem zur Kommunikation in Echtzeitsystemen verwendet wird.

In einer weiteren möglichen Ausführungsform des erfindungsgemäßen Verfahrens ist das Kommunikationssystem , eine Kommunikation in wiederkehrenden Zyklen.

Dabei ist es möglich, dass die Kommunikationszyklen einen bei Initialisierung vereinbarten und im weiteren Betrieb konstanten Aufbau besitzen.

In einer weiteren Ausführungsform des erfindungsgemäßen Verfahrens wird das Kommunikationssystem zur Synchronisierung von Teilnehmern des Kommunikationssystems verwendet.

Im Falle eines zyklischen synchronisierenden Kommunikationssystems ist es denkbar, dass ein Teil-Telegramm der Folge der Teil-Telegramme als synchronisierendes Telegramm ausgewählt, als solches kenntlich gemacht und allen Teilnehmern als solches kommuniziert wird.

In einer weiteren Ausführungsform des erfindungsgemäßen Verfahrens basiert das Kommunikationssystem auf einem Ethernet-Protokoll.

Ferner ist es denkbar, dass das Kommunikationssystem zu Automatisierungszwecken eingesetzt wird.

Daneben kann das Kommunikationssystem zur Antriebssynchronisation, zur Antriebsregelung, zur Ein-/Ausgabe von Ein-/Ausgabedaten ünd/oder zu Messzwecken verwendet werden.

Ferner umfasst die vorliegende Erfindung ein Kommunikationssystem mit mehreren Teilnehmern und einem Feldbussystem, bei dem die Teilnehmer mittels des Feldbussystems über Datentelegramme kommunizieren, die jeweils mindestens eine Zieladresse, eine Quelladresse und eine eine vorgegebene maximale Menge nicht überschreitende Menge an Nutzdaten enthalten, wobei das Kommunikationssystem eine Steuereinheit umfasst, die die Menge zu übertragender Nutzdaten mit der für ein Datentelegramm vorgegebenen Menge vergleicht, im Falle, dass die Menge zu übertragender Nutzdaten größer ist als die vorgegebene Menge, die Menge zu übertragender Nutzdaten auf mehrere Teil-Telegramme fragmentiert und die jeweiligen Teil-Telegramme in einer definierbaren Folge von Teil-Telegrammen gesteuert hintereinander sendet.

Denkbar ist es, dass bei dem Kommunikationssystem eine Unterscheidung der jeweiligen Teil-Telegramme innerhalb der Folge von Teil-Telegrammen anhand einer Telegrammkennung durchführbar ist.

In einer weiteren möglichen Ausführungsform des Kommunikationssystems hängt die Steuereinheit die Teil-Telegramme innerhalb der Folge der Teil-Telegramme logisch aneinander, so dass die Folge der Teil-Telegramme für einen sendenden und/oder einen empfangenden Teilnehmer als ein einziges Datentelegramm fungiert bzw. erscheint.

Ferner ist es denkbar, dass an einen empfangenden Teilnehmer adressierte Teil-Telegramme seitens des empfangenden Teilnehmers automatisch aus der Folge der Teil-Telegramme anhand eines in dem Teilnehmer hinterlegten Offsets herausfilterbar sind.

Ferner können alle an einen Empfänger zu sendende Nutzdaten innerhalb eines einzigen Teil-Telegramms abgelegt sein.

In einer weiteren Ausführungsform des erfindungsgemäßen Kommunikationssystems ist im Falle eines zyklischen synchronisierenden Kommunikationssystems ein Teil-Telegramm der Folge der Teil-Telegramme als synchronisierendes Telegramm auswählbar, als solches kenntlich machbar und allen Teilnehmern als solches kommunizierbar.

Ferner umfasst die vorliegende Erfindung eine Verwendung des erfindungsgemäßen Verfahrens bei einem Kommunikationssystem mit einer begrenzten als größtmöglich vorgegebenen Datentelegrammgröße. Ein derartiges Kommunikationssystem ist beispielsweise das bereits erwähnte Ethernet oder auch ein als SERCOS interface (serial realtime communication system) bezeichnetes Kommunikationssystem.

Darüber hinaus betrifft die vorliegende Erfindung ein Computerprogramm mit Programmcode, das bei Ablauf auf einem Computer oder einem Computersystem dazu geeignet ist, ein erfindungsgemäßes Verfahren durchzuführen.

Ferner betrifft die vorliegende Erfindung ein Computerprogrammprodukt mit Programmcode, der auf einem computerlesbaren Datenträger gespeichert ist, um ein erfindungsgemäßes Verfahren durchzuführen, wenn das Computerprogramm auf einem Computer zur Ausführung kommt.

Weitere Vorteile und Ausgestaltungen der Erfindung ergeben sich aus der folgenden Beschreibung der beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt in schematischer Darstellung den Aufbau eines Datentelegramms gemäß dem Stand der Technik,
- Figur 2: zeigt in schematischer Darstellung den Aufbau eines Datentelegramms gemäß einer Ausführungsform des erfindungsgemäßen Verfahrens,
- Figur 3: zeigt in schematischer Darstellung eine Aufsplittung von Nutzdaten auf mehrere Teil-Telegramme gemäß einer möglichen Ausführungsform des erfindungsgemäßen Verfahrens,
- Figur 4: zeigt in schematischer Darstellung eine Aufsplittung von Nutzdaten auf mehrere Teil-Telegramme gemäß einer anderen möglichen Ausführungsform des erfindungsgemäßen Verfahrens.

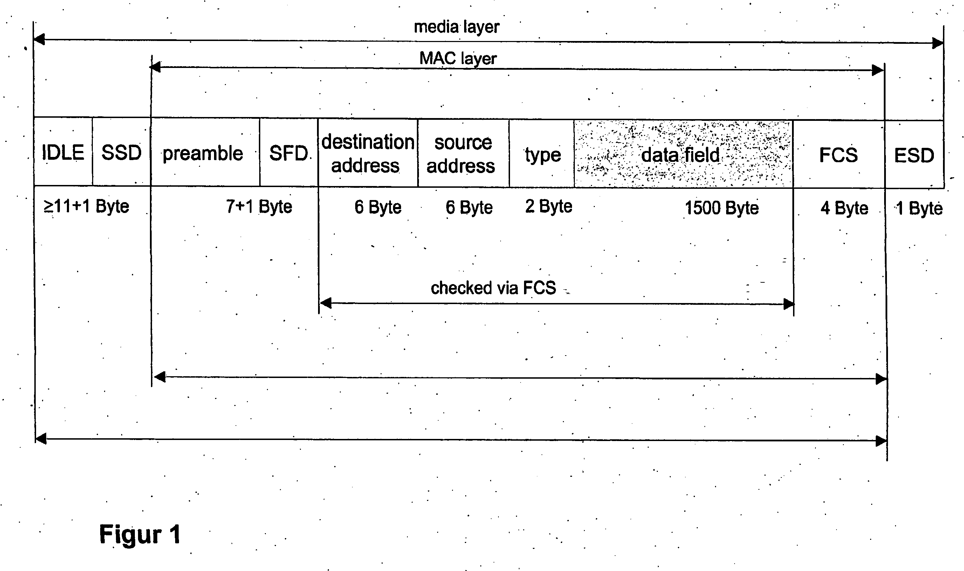

In Figur 1 ist schematisch ein Aufbau eines typischen Datentelegramms dargestellt. Dem Datentelegramm voran geht ein als "IDLE" bezeichnetes Zeichen, welches eine Größe von ≥ 11 Bytes haben kann. Dieses Zeichen sorgt dafür, dass potentielle Empfänger nachfolgender Datentelegramme auch während des Nichtsendens von Datentelegrammen aktiviert und empfangsbereit bleiben. Dem IDLE nachfolgend kommt ein sogenannter SSD (Start Stream Delimiter), welcher anzeigt, dass ein Datentelegramm folgen wird. Das eigentliche Datentelegramm beginnt mit einer "preamble" und einem sogenannten SFD (Start Frame Delimiter). Bei dem hier dargestellten Fall kann es sich beispielsweise um ein sogenanntes Masterdatentelegramm (MDT) handeln, welches Daten an sogenannte Slaves weiterleitet. Ein derartiges MDT ist an alle weiteren an das Kommunikationssystem angeschlossene Teilnehmer, den Slaves, gerichtet und wird von all diesen Teilnehmern ausgewertet. Das bedeutet, dass es sich bei einem MDT um ein sogenanntes Broadcast-Telegramm handelt. Die Teilnehmer bzw. die Slaves sind in der Lage anhand eines in ihnen jeweils hinterlegten Offsets festzustellen, an welcher Stelle des Datentelegramms die für sie bzw. die an sie adressierten Informationen beinhaltet sind. Ferner kann es sich auch um ein sogenanntes Antriebstelegramm AT handeln, welches seitens eines Slaves an einen entsprechenden Master gesendet wird.

Das MDT oder das AT beginnt mit einer Angabe der Zieladresse (destination address) und der Quelladresse (source address). Darauf folgt ein Feld, welches den Typ bzw. die Länge (type/length) des Datentelegramms beinhaltet. In diesem Feld ist entweder die Telegrammart oder die Telegrammlänge enthalten. Eine derartige Angabe einer Telegrammart wird hier gemäß einer Standardvereinbarung, die seitens einer internationalen Gesellschaft global festgelegt bzw. vorgegeben wurde, hinterlegt. Die hier angegebene Telegrammart gibt Auskunft darüber, was ein nachfolgendes Datenfeld beinhaltet bzw. wie dessen Inhalt zu interpretieren ist. Es wird vermerkt, ob es sich um ein IP-Datenfeld oder um eine Datenfeld für eine Echtzeitkommunikation, wie es beispielsweise bei einem SERCOS interface (Serial Realtime Communication System) verwendet wird, handelt. Die voranstehend genannten Angaben, nämlich Zieladresse, Quelladresse und Typ/Längen-Angaben sind auch in anderen Telegrammen, wie bspw. Datentelegrammen und Anforderungs-Telegrammen, enthalten.

Bei einem MDT ist ferner in der Zieladresse vermerkt, dass das MDT an alle Teilnehmer gerichtet ist, also ein, wie bereits erwähnt, Broadcast-Telegramm ist. Danach folgen in einem Feld "data field" für die Teilnehmer entsprechend dem in ihm jeweils hinterlegten Offset an sie adressierte Nutzdaten. Zum Abschluss des Datentelegramms wird ein sogenanntes FCS-Zeichen übertragen. Dieses Zeichen FCS (Frame Check Sequence) dient zur Datensicherung durch eine Prüfsummenbildung: Das Datenfeld des MDT ist in seiner Länge limitiert, wie beispielsweise im Falle eines Ethernets auf 1.500 Byte. Dadurch ist auch die Menge der an die jeweiligen Teilnehmer adressierten Nutzdaten begrenzt, was bedeutet, dass oft nicht alle zu übertragenden Nutzdaten an die einzelnen Teilnehmer übertragen werden können. Ein Zeichen ESD (End Stream Delimiter) zeigt das Ende des Datentelegramms an.

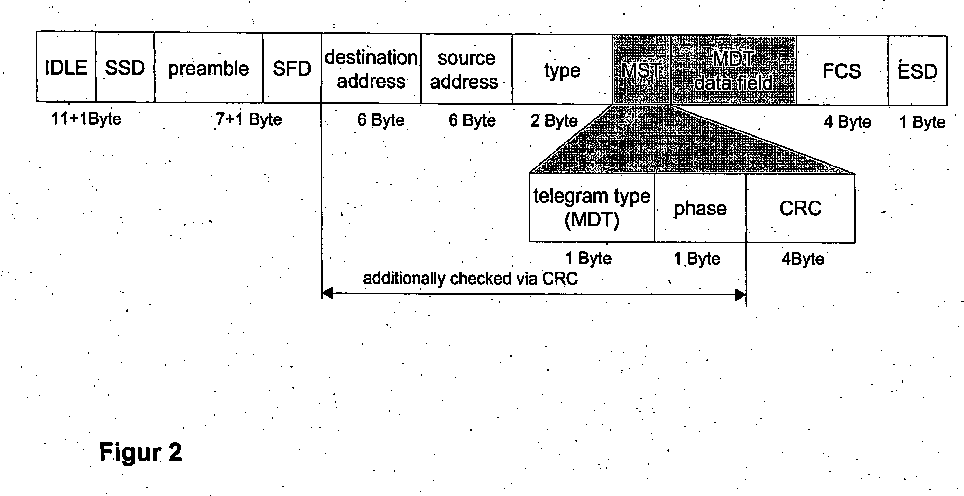

Figur 2 zeigt eine Ausführungsform eines MDT, wie es erfindungsgemäß aufgebaut sein kann. Wie auch das in Figur 1 beschriebene Datentelegramm fängt das hier dargestellte MDT mit Angabe einer Ziel- (destination address) und einer Quelladresse (source address) an. Diese Angaben sind gefolgt von einem Feld, welches den Typ bzw. die Länge (type/length) des Datentelegramms beinhaltet. In diesem. Feld (type) ist entweder die Telegrammart oder die Telegrammlänge enthalten. Eine derartige Angabe einer Telegrammart wird auch hier, wie bereits in Figur 1 beschrieben, gemäß einer Standardvereinbarung, die seitens einer internationalen Gesellschaft global festgelegt bzw. vorgegeben wurde, hinterlegt. Die hier angegebene Telegrammart gibt Auskunft darüber, was ein nachfolgendes Datenfeld beinhaltet bzw. wie dessen Inhalt zu interpretieren ist. Es wird vermerkt, ob es sich um ein IP-Datenfeld oder um eine Datenfeld für eine Echtzeitkommunikation, wie es beispielsweise bei einem SERCOS interface (Serial Realtime Communication System) verwendet wird, handelt.

Darauf folgt in einem Feld MST (Master Synchronisations-Telegram) eine Synchronisationsinformation. Das MST ist in dem hier dargestellten Fall in das Datenfeld integriert. Es untergliedert sich nochmals in drei Felder. In einem ersten Feld des MST wird dabei eine Kennung des betreffenden Datentelegramms, wie hier des MDT, angegeben. Anhand dieser Kennung kann ein spezifisches Datentelegramm von anderen nachfolgenden oder vorangehenden Datentelegrammen unterschieden werden. Somit kann eine Folge von Datentelegrammen entsprechend einer durch die Kennung definierbaren Abfolge behandelt werden. Diese Art der Kennung ist von der Angabe einer Telegrammart, wie sie in dem dem Datenfeld vorangehenden Feld gemacht wird, zu unterscheiden. In einem weiteren mit "phase" bezeichneten Feld wird Information über den Systemzustand gegeben. Eine Übertragung von Information zu dem Systemzustand sorgt für eine Synchronisierung der Systemzeit bei allen Teilnehmern des Kommunikationssystems. Ein weiteres Feld CRC kann optional vorgesehen sein. Dieses Feld sorgt für eine zusätzliche Überprüfung der bis dahin gemachten Angaben des betreffenden Datentelegramms.

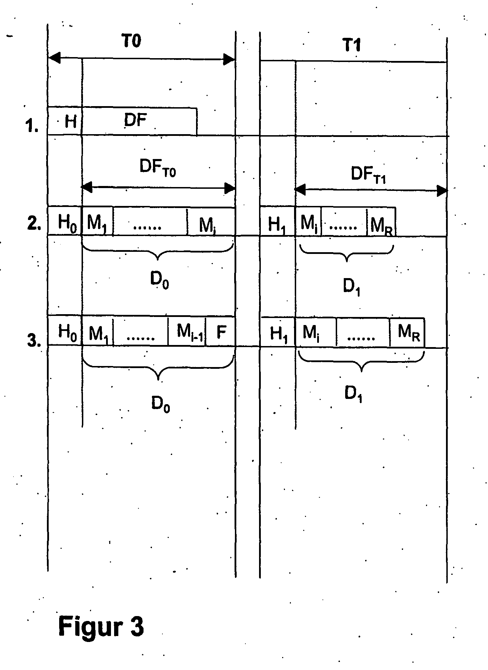

Figur 3 zeigt in schematischer Darstellung drei Fallbeispiele 1 bis 3, in welchen mittels Datentelegramme, wie beispielsweise MDTs, bestimmte Mengen M₁ bis M_{R} von Nutzdaten D an jeweilige empfangende Teilnehmer 1 bis R übertragen werden sollen. In den Fällen 2 und 3 ist dabei jeweils eine Fragmentierung der Menge von zu übertragenden Nutzdaten auf mehrere Teil-Telegramme vorgenommen.

In Fall. 1 zeigt das Datentelegramm T0 einen sogenannten "Header" H, der alle bereits in Figur 1 erwähnten wesentlichen Angaben zur Übertragung eines Datentelegramms enthält. Dem Header H nachfolgend ist ein Datenfeld DF gezeigt, welches alle seitens des Datentelegramms T0 zu übertragende Nutzdaten enthält. Im Falle des Datentelegramms T0 ist die Menge der zu übertragenden Nutzdaten kleiner als eine vorgegebene maximal übertragbare Menge MTU, die beispielsweise im Fall eines Ethernets bei 1.500 Byte liegt. Demzufolge können hier alle Nutzdaten mittels eines einzigen Datentelegramms übertragen werden, das heißt, eine Fragmentierung der Nutzdaten auf mehrere Teil-Telegramme ist hier nicht nötig.

Im Fall 2 reicht hingegen die MTU eines Datentelegramms nicht aus, um alle die im Fall 2 zu übertragenden Nutzdaten D in einem einzigen Datentelegramm zu senden. Hier werden nunmehr die Nutzdaten D auf zwei aufeinanderfolgende Teil-Telegramme T0 und T1 verteilt. Die Summe der auf die Teil-Telegramme verteilten Nutzdaten D₀ und D₁ entspricht D. Beide Teil-Telegramme verfügen jeweils über einen Header H0 bzw. H1. Im hier dargestellten Fall wird die MTU bzw. die Länge des Datenfeldes DF_{T0} des Teil-Telegramms T0 vollständig mit zu übertragenden Nutzdaten aufgefüllt. Erst wenn das Datenfeld DF_{T0} maximal mit einer Nutzdatenmenge D0 belegt ist, wird der verbleibende Teil der Nutzdaten D1 in dem Teil-Telegramm T1 abgelegt und damit übertragen. Dabei wird eine für den Teilnehmer i bestimmte Menge Mᵢ von Nutzdaten auf die beiden Teil-Telegramme T0 und T1 aufgeteilt.

Der Fall 3 zeigt eine zu Fall 2 alternative Möglichkeit einer Fragmentierung von Nutzdaten auf mehrere Teil-Telegramme. Im hier dargestellten Fall sollen ebenfalls bestimmte Mengen M₁ bis M_{R} von Nutzdaten an entsprechende Teilnehmer 1 bis R eines Kommunikationssystems über ein bzw. mehrere Datentelegramme, wie beispielsweise eines oder mehrere Masterdatentelegramme MDT seitens eines Masters bzw. eines Teilnehmers des Kommunikationssystems an die anderen Teilnehmer eines Kommunikationssystems gesendet werden. Auch hier reicht, wie bereits in Fall 2, eine für das Datentelegramm vorgegebene maximal übertragbare Menge an Nutzdaten, d.h. eine sogenannte MTU (Maximum Transmission Unit), nicht aus, um die Gesamtmenge von Nutzdaten D zu übertragen. Deshalb werden die Daten hier auf zwei Teil-Telegramme T0 und T1 fragmentiert. Dabei entspricht, die Summe der in T0 übertragenen Nutzdaten D₀ und der in T1 übertragenen Nutzdaten D₁ der Gesamtmenge von Nutzdaten D. Wie in Fall 2 geht auch hier die zu übertragende Menge Mᵢ an Nutzdaten für einen empfangenden Teilnehmer i über die Länge des Datenfeldes eines Teil-Telegramms hinaus. Im hier dargestellten Fall wird nun mittels sogenannter Füllinformation F am Ende des entsprechenden Teil-Telegramms T0 der Beginn des Datenfeldes für den betreffenden empfangenden Teilnehmer i auf das nächste Teil-Telegramm T1 verschoben. Man spricht dabei von "Padding".

Alternativ zu dem hier dargestellten Fall ist es jedoch auch denkbar, dass das erste Teil-Telegramm T0 eine kürzere Länge besitzt als die für ein Datentelegramm vorgegebene maximal übertragbare Länge, die sogenannte MTU (maximum transmission unit). In einem derartigen hier nicht dargestellten Fall wäre das erste Teil-Telegramm T0 verkürzt, d.h. der im hier dargestellten Fall 3 eingezeichnete Mechanismus des Auffüllens des Datenfeldes "F", was einem sogenannten "Padding" entspricht, würde dabei nicht angewendet werden.

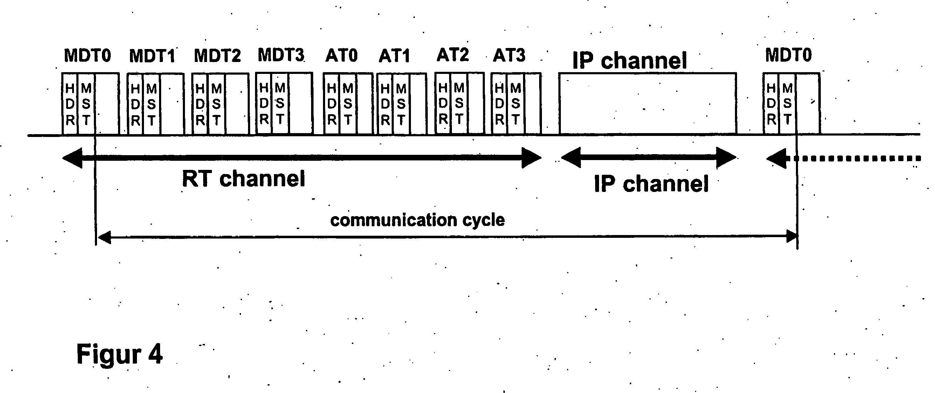

In Figur 4 ist eine weitere mögliche Fragmentierung von Nutzdaten auf mehrere Teil-Telegramme gezeigt. Dabei ist ein vollständiger Kommunikationszyklus dargestellt, der einen Kanal für Echtzeitkommunikation (RT channel) und einen IP Kanal umfasst. Der IP Kanal erlaubt es, entweder zusätzliche echtzeitrelevante Daten oder nicht-echtzeitkritische Daten zu übertragen. Im RT Kanal werden im hier dargestellten Fall MDTs und ATs übertragen. Eingeleitet wird der Zyklus durch ein MDT MDT0, wobei u.A. Synchronisationsinformation übertragen wird. Beendet wird der Zyklus ebenfalls durch ein MDT MDT0, was zugleich einen Nachfolgezyklus einleitet. Im RT Kanal wird hier eine Folge bestehend aus vier MDTs MDT0 bis MDT3 und vier ATs AT0 bis AT3 übertragen. Bei einer hier dargestellten zyklischen synchronisierten Kommunikation wird ein Teil-Telegramm der Folge von Teil-Telegrammen als synchronisierendes Telegramm ausgewählt. Im hier dargestellten Fall kann dazu das erste Folgetelegramm MDT0 ausgewählt, als solches kenntlich gemacht und allen Teilnehmern des Kommunikationssystems als solches kommuniziert werden. Das bedeutet, dass Synchronisationsinformation einmalig pro Kommunikationszyklus gesendet wird. Die Synchronisationsinformation wird dabei in einem MST-Datenfeld von dem MDT0 hinterlegt. Optional kann das jeweilige MST-Datenfeld der anderen verbleibenden Folgetelegramme wegfallen.

Im Falle von Ethernet ist, wie bereits erwähnt, die MTU auf 1.500 Byte limitiert. Es ergibt sich somit eine Folge von Teil-Telegrammen T0 bis TN, die unter Berücksichtigung systemabhängiger Mindest-Telegramm-Abständen hintereinander gesendet werden. Eine Unterscheidung zwischen dem ersten Teil-Telegramm T0 der Folge der Teil-Telegramme und den nachfolgenden Teil-Telegrammen kann anhand einer Telegrammkennung durchgeführt werden. Eine derartige Telegrammkennung kann beispielsweise in einem Feld "telegram type" des MST, wie es in Figur 2 erläutert ist, eingefügt werden. Die nun in den einzelnen Teil-Telegrammen T0 bis TN hinterlegten und dadurch übertragenen Nutzdaten werden für den sendenden bzw. die empfangenden Teilnehmer logisch aneinandergehängt so als handle es sich um ein einziges längeres Datentelegramm. In den empfangenden Teilnehmern ist dabei abgelegt, an welchem Offset die an sie adressierten Nutzdaten enthalten sind. Anhand eines derartigen Offsets des an den jeweiligen Teilnehmer adressierten Datenfeldes kann ein empfangender Teilnehmer automatisch die für ihn bestimmten Teil-Telegramme aus der Folge der Teil-Telegramme herausfiltern. Ein empfangender Teilnehmer muss demnach nicht zwingend alle Teil-Telegramme einer spezifischen Folge von Teil-Telegrammen empfangen und auswerten.

Im Falle eines zyklisch synchronisierenden Kommunikationssystems werden Synchronisationsinformationen, wie erwähnt, einmalig pro Kommunikationszyklus gesendet. Diese Synchronisationsinformation ist, wie bereits in Figur 2 erwähnt, in einem sogenannten MST-Datenfeld hinterlegt. Es kann nunmehr eines der Teil-Telegramme der Folge der Teil-Telegramme als synchronisierendes Telegramm ausgesucht und kenntlich gemacht werden. Eine derartige Kenntlichmachung kann wiederum über das Feld "telegram type" erfolgen. Eine derart vorgenommene Vereinbarung muss allen Teilnehmern des Kommunikationssystems bekannt sein bzw. bekannt gemacht werden. Optional fällt das MST-Datenfeld der Teil-Telegramme, welche nicht als synchronisierendes Telegramm ausgesucht wurden, weg. Vorteilhafterweise synchronisiert das erste Teil-Telegramm der Folge der Teil-Telegramme.

Wie bereits erwähnt, wird der Sendezeitpunkt der FolgeTelegramme direkt hintereinander gewählt. Optional kann eine Erkennung anhand der Telegrammkennung bei beliebiger Sendereihenfolge durchgeführt werden, was einer Erkennung "on-the-fly" entspricht. Ferner ist es denkbar, durch eine Vorgabe der Sendezeiten den Teilnehmern zu ermöglichen, über den Empfangszeitpunkt die einzelnen Teil-Telegramme zuzuordnen.

## Patentansprüche

1. Verfahren zur Regelung einer Übertragung einer Menge (M₁, Mᵢ₋₁, Mᵢ, M_{R}) zu übertragender Nutzdaten (Dₐ, D₁) zwischen mehreren Teilnehmern eines Kommunikationssystems über ein Feldbussystem, bei dem die einzelnen Teilnehmer über Datentelegramme (MDT, MDT0, MDT1, MDT2, MDT3) kommunizieren, die jeweils mindestens eine Zieladresse, eine Quelladresse und eine eine vorgegebene maximale Menge (M₁, Mᵢ₋₁, Mᵢ, M_{R}) nicht überschreitende Menge (M₁, Mᵢ₋₁, Mᵢ, M_{R}) an Nutzdaten (Dₐ, D₁) enthalten, wobei im Falle, dass die für ein Datentelegramm (MDT, MDT0, MDT1, MDT2, MDT3) vorgegebene maximale Menge (M₁, Mᵢ₋₁, Mᵢ, M_{R}) an Nutzdaten (Dₐ, D₁) kleiner ist als die Menge (M₁, Mᵢ₋₁, Mᵢ, M_{R}) zu übertragender Nutzdaten (Dₐ, D₁) , die Menge (M₁, Mᵢ₋₁, Mᵢ, M_{R}) zu übertragender Nutzdaten (Dₐ, D₁) auf mehrere Teil-Telegramme (T0, T1) fragmentiert und somit verteilt wird und die jeweiligen Teil-Telegramme (T0, T1) hintereinander gesendet werden,
**dadurch gekennzeichnet,**
**dass** ein erstes Teil-Telegramm (T0, T1) als synchronisierendes Teil-Telegramm (T0, T1) einer Folge der Teil-Telegramme (T0, T1) ausgewählt wird, und dass die Teil-Telegramme (T0, T1) direkt hintereinander versendet werden, so dass die Teil-Telegramme (T0, T1) für einen sendenden und/oder einen empfangenden Teilnehmer als ein einziges Datentelegramm (MDT, MDT0, MDT1, MDT2, MDT3) erscheinen, wobei die einzelnen Teil-Telegramme (T0, T1) zu direkt hintereinander liegenden Sendezeiten gesendet werden, ohne dass weitere Telegramme dazwischen liegen.

2. Verfahren nach Anspruch 1, bei dem eine Unterscheidung der jeweiligen Teil-Telegramme (T0, T1) anhand einer Telegrammkennung durchgeführt wird.

3. Verfahren nach einem der Ansprüche 1 oder 2, bei dem ein empfangender Teilnehmer anhand eines in dem Teilnehmer hinterlegten Offsets automatisch an ihn adressierte Teil-Telegramme (T0, T1) herausfiltern kann.

4. Verfahren nach einem der vorhergehenden Ansprüche, bei dem das Kommunikationssystem zur Kommunikation in Echtzeitsystemen verwendet wird.

5. Verfahren nach einem der vorhergehenden Ansprüche, bei dem das Kommunikationssystem eine Kommunikation in wiederkehrenden Zyklen ist.

6. Verfahren nach Anspruch 5, bei dem die Kommunikationszyklen einen bei Initialisierung vereinbarten und im weiteren Betrieb konstanten Aufbau besitzen.

7. Verfahren nach einem der vorhergehenden Ansprüche, bei dem für die einzelnen Teil-Telegramme (T0, T1) einzelne Sendezeiten vorgegeben werden.

8. Verfahren nach einem der vorhergehenden Ansprüche, bei dem das Kommunikationssystem zur Synchronisierung von Teilnehmern des Kommunikationssystems verwendet wird.

9. Verfahren nach einem der vorhergehenden Ansprüche, bei dem das Kommunikationssystem auf einem Ethernet-Protokoll basiert.

10. Verfahren nach einem der vorhergehenden Ansprüche, bei dem das Kommunikationssystem zu Automatisierungszwecken eingesetzt wird.

11. Verfahren nach einem der vorhergehenden Ansprüche, bei dem das Kommunikationssystem zur Antriebssynchronisation, zur Antriebsregelung, zur Ein-/Ausgabe von Ein-/Ausgabedaten und/oder zu Messzwecken verwendet wird.

12. Verwendung des Verfahrens nach einem der Ansprüche 1 bis 11 zur Echtzeitkommunikation in einem Kommunikationssystem mit einer begrenzten als größtmöglich vorgegebenen Datentelegrammgröße.

13. Computerprogramm mit Programmcode, das bei Ablauf auf einem Computer oder einem Computersystem dazu geeignet ist, das Verfahren nach einem der Ansprüche 1 bis 11 durchzuführen.

14. Computerprogrammprodukt mit Programmcode, der auf einem computerlesbaren Datenträger gespeichert ist, um das Verfahren nach einem der Ansprüche 1 bis 11 durchzuführen, wenn das Computerprogramm auf einem Computer zur Ausführung kommt.

15. Computersystem mit einer Speichereinheit, in der ein Computerprogramm mit Programmcode gespeichert ist, das bei Ablauf auf einem Computer oder einem Computersystem dazu geeignet ist, das Verfahren nach einem der Ansprüche 1 bis 11 durchzuführen.

16. Kommunikationssystem mit mehreren Teilnehmern und einem Feldbussystem, bei dem die Teilnehmer mittels des Feldbussystems über Datentelegramme (MDT, MDT0, MDT1, MDT2, MDT3) kommunizieren, die jeweils mindestens eine Zieladresse, eine Quelladresse und eine eine vorgegebene maximale Menge (M₁, Mᵢ₋₁, Mᵢ, M_{R}) nicht überschreitende Menge (M₁, Mᵢ₋₁, Mᵢ, M_{R}) an Nutzdaten (Dₐ, D₁) enthalten, wobei das Kommunikationssystem eine Steuereinheit umfasst, die die Menge (M₁, Mᵢ₋₁, Mᵢ, M_{R}) zu übertragender Nutzdaten (Dₐ, D₁) mit der für ein Datentelegramm (MDT, MDT0, MDT1, MDT2, MDT3) vorgegebenen maximalen Menge (M₁, Mᵢ₋₁, Mᵢ, M_{R}) an Nutzdaten (Dₐ, D₁) vergleicht, im Falle, dass die Menge (M₁, Mᵢ₋₁ Mᵢ, M_{R}) zu übertragender Nutzdaten (Dₐ, D₁) größer ist als die vorgegebene maximale Menge (M₁, Mᵢ-₁, Mᵢ, M_{R}), die Menge (M₁, Mᵢ₋₁, Mᵢ, M_{R}) zu übertragender Nutzdaten (Dₐ, D₁) auf mehrere Teil-Telegramme (T0, T1) fragmentiert und somit verteilt und die jeweiligen Teil-Telegramme (T0, T1) hintereinander sendet,
**dadurch gekennzeichnet,**
**dass** die Steuereinheit ein erstes Teil-Telegramm (T0, T1) als synchronisierendes Teil-Telegramm (T0, T1) einer Folge der Teil-Telegramme (T0, T1) auswählt, und dass die Teil-Telegramme (T0, T1) innerhalb der Folge der Teil-Telegramme (T0, T1) direkt hintereinander versendet werden, so dass die Teil-Telegramme (T0, T1) für einen sendenden und/oder einen empfangenden Teilnehmer als ein einziges Datentelegramm (MDT, MDT0, MDT1, MDT2, MDT3) erscheinen, wobei die Steuereinheit die einzelnen Teil-Telegramme (T0, T1) zu direkt hintereinander liegenden Sendezeiten versendet, ohne dass weitere Telegramme dazwischen liegen.

17. Kommunikationssystem nach Anspruch 16, bei dem eine Unterscheidung der jeweiligen Teil-Telegramme (T0, T1) anhand einer Telegrammkennung durchführbar ist.

18. Kommunikationssystem nach einem der Ansprüche 16 oder 17, bei dem an einen empfangenden Teilnehmer adressierte Teil-Telegramme (T0, T1) seitens des empfangenden Teilnehmers automatisch anhand eines in dem Teilnehmer hinterlegten Offsets herausfilterbar sind.

## Claims

1. Method for controlling transmission of a volume (M₁, M_{i - 1}, Mᵢ, M_{R}) of useful data (Dₐ, D₁) to be transmitted between a plurality of subscribers in a communication system via a field bus system, in which the individual subscribers communicate by means of data telegrams (MDT, MDT0, MDT1, MDT2, MDT3) which respectively contain at least one destination address, a source address and a volume (M₁, M_{i - 1}, Mᵢ, M_{R}) of useful data (Dₐ, D₁) which does not exceed a prescribed maximum volume (M₁, M_{i - 1}, Mᵢ, M_{R}), wherein if the maximum volume (M₁, M_{i - 1}, Mᵢ, M_{R}) of useful data (Dₐ, D₁) which is prescribed for a data telegram (MDT, MDT0, MDT1, MDT2, MDT3) is smaller than the volume (M₁, M_{i-1,} Mᵢ, M_{R}) of useful data (Dₐ, D₁) to be transmitted then the volume (M₁, M_{i - 1}, Mᵢ, M_{R}) of useful data (Dₐ, D₁) to be transmitted is fragmented and hence distributed over a plurality of sub-telegrams (T0, T1) and the respective sub-telegrams (T0, T1) are sent in succession,
**characterized**
**in that** a first sub-telegram (T0, T1) is selected as synchronizing sub-telegram (T0, T1) for a series of sub-telegrams (T0, T1), and in that the sub-telegrams (T0, T1) are sent in direct succession, so that the sub-telegrams (T0, T1) appear as a single data telegram (MDT, MDT0, MDT1, MDT2, MDT3) to a sending and/or receiving subscriber, the individual sub-telegrams (T0, T1) being sent at directly successive sending times without there being further telegrams in between.

2. Method according to Claim 1, in which the respective sub-telegrams (T0, T1) are distinguished using a telegram identifier.

3. Method according to one of Claims 1 and 2, in which a receiving subscriber can use an offset stored in the subscriber to automatically filter sub-telegrams (T0, T1) addressed to it.

4. Method according to one of the preceding claims, in which the communication system is used for communication in real-time systems.

5. Method according to one of the preceding claims, in which the communication system is communication in recurring cycles.

6. Method according to Claim 5, in which the communication cycles have a structure which is agreed upon initialization and is constant throughout operation.

7. Method according to one of the preceding claims, in which individual sending times are prescribed for the individual sub-telegrams (T0, T1).

8. Method according to one of the preceding claims, in which the communication system is used for synchronizing subscribers in the communication system.

9. Method according to one of the preceding claims, in which the communication system is based on an Ethernet protocol.

10. Method according to one of the preceding claims, in which the communication system is used for automation purposes.

11. Method according to one of the preceding claims, in which the communication system is used for drive synchronization, for drive control, for input/output of input/output data and/or for measurement purposes.

12. Use of the method according to one of Claims 1 to 11 for real-time communication in a communication system with a limited data telegram size which is prescribed as the largest possible.

13. Computer program with program code which, upon execution on a computer or a computer system, is suitable for carrying out the method according to one of Claims 1 to 11.

14. Computer program product with program code which is stored on a computer-readable data storage medium in order to carry out the method according to one of Claims 1 to 11 when the computer program is executed on a computer.

15. Computer system having a memory unit which stores a computer program with program code which, upon execution on a computer or a computer system, is suitable for carrying out the method according to one of Claims 1 to 11.

16. Communication system having a plurality of subscribers and a field bus system, in which the subscribers use the field bus system to communicate by means of data telegrams (MDT, MDT0, MDT1, MDT2, MDT3) which respectively contain at least one destination address, a source address and a volume (M₁, M_{i - 1}, Mᵢ, M_{R}) of useful data (Dₐ, D₁) which does not exceed a prescribed maximum volume (M₁, Mᵢ - ₁, Mᵢ, M_{R}), wherein the communication system comprises a control unit which compares the volume (M₁, Mᵢ - ₁, Mᵢ, M_{R}) of useful data (Dₐ, D₁) to be transmitted with the maximum volume (M₁, M_{i - 1}, Mᵢ, M_{R}) of useful data (Dₐ, D₁) which is prescribed for a data telegram (MDT, MDT0, MDT1, MDT2, MDT3), fragments and hence distributes the volume (M₁, Mᵢ - 1, Mᵢ, M_{R}) of useful data (Dₐ, D₁) to be transmitted over a plurality of sub-telegrams (T0, T1) if the volume (M₁, Mᵢ - ₁, Mᵢ, M_{R}) of useful data (Dₐ, D₁) to be transmitted is larger than the prescribed maximum volume (M₁, M_{i - 1}, Mᵢ, M_{R}), and sends the respective sub-telegrams (T0, T1) in succession,
**characterized**
**in that** the control unit selects a first sub-telegram (T0, T1) as synchronizing sub-telegram (T0, T1) for a series of the sub-telegrams (T0, T1), and in that the sub-telegrams (T0, T1) within the series of the sub-telegrams (T0, T1) are sent in direct succession, so that the sub-telegrams (T0, T1) appear as a single data telegram (MDT, MDT0, MDT1, MDT2, MDT3) to a sending and/or receiving subscriber, the control unit sending the individual sub-telegrams (T0, T1) at directly successive sending times without there being further telegrams in between.

17. Communication system according to Claim 16, in which the respective sub-telegrams (T0, T1) can be distinguished using a telegram identifier.

18. Communication system according to one of Claims 16 and 17, in which sub-telegrams (T0, T1) addressed to a receiving subscriber can be automatically filtered by the receiving subscriber using an offset which is stored in the subscriber.

## Revendications

1. Procédé de régulation du transfert d'un ensemble (M₁, M₁₋₁, Mᵢ, M_{R}) de données utiles (Dₐ, D₁) à échanger entre plusieurs participants d'un système de communication par l'intermédiaire d'un système de bus de champ, selon lequel les différents participants communiquent par des télégrammes de données (MDT, MDT0, MDT1, MDT2, MDT3) ayant chacun au moins une adresse de destination, une adresse source et un ensemble (M₁, M₁₋₁, Mᵢ, M_{R}) de données utiles (Dₐ, D₁) qui ne dépasse pas un ensemble maximum prédéfini (M₁, M₁₋₁, Mᵢ, M_{R}),
et au cas où l'ensemble maximal prévu (M₁, M₁₋₁, Mᵢ, M_{R}) pour un télégramme de données (MDT, MDT0, MDT1, MDT2, MDT3) pour des données utiles (Dₐ, D₁) est inférieur à l'ensemble (M₁, M₁₋₁, Mᵢ, M_{R}) de données utiles (Dₐ, D₁) à transférer, l'ensemble (M₁, M₁₋₁, Mᵢ, M_{R}) de données utiles (Dₐ, D₁) à transférer est fragmenté en plusieurs télégrammes partiels (T0, T₁) et il est ainsi réparti et les télégrammes partiels (T0, T₁) respectifs sont envoyés les uns à la suite des autres,
**caractérisé en ce qu'**
on sélectionne un premier télégramme partiel (T0, T₁) comme télégramme partiel de synchronisation (T0, T1) d'une suite de télégrammes partiels (T0, T1), et
les télégrammes partiels (T0, T1) sont envoyés directement les uns à la suite des autres de façon que les télégrammes partiels (T0, T1) apparaissent pour un participant émetteur et/ou récepteur comme un unique télégramme de données (MDT, MDT0, MDT1, MDT2, MDT3),
les différents télégrammes partiels (T0, T1) sont envoyés directement à des instants d'émission successifs sans intercaler d'autres télégrammes.

2. Procédé selon la revendication 1,
selon lequel
on distingue les différents télégrammes partiels (T0, T1) à l'aide d'une caractéristique de télégramme.

3. Procédé selon la revendication 1 ou 2,
selon lequel
un participant récepteur sépare par filtrage, automatiquement le télégramme partiel (T0, T1) qui lui est destiné à l'aide d'un décalage enregistré dans le participant.

4. Procédé selon les revendications précédentes,
selon lequel
le système de communication est utilisé pour communiquer dans des systèmes à temps réel.

5. Procédé selon les revendications précédentes,
selon lequel
le système de communication est une communication en cycle récurrent.

6. Procédé selon la revendication 5,
selon lequel
les cycles de communication ont une structure convenue lors de l'initialisation et qui reste constante pour la suite du fonctionnement.

7. Procédé selon les revendications précédentes,
selon lequel
différents temps d'émission sont prévus pour les différents télégrammes partiels (T0, T1).

8. Procédé selon les revendications précédentes,
selon lequel
le système de communication est utilisé pour synchroniser les participants du système de communication.

9. Procédé selon les revendications précédentes,
selon lequel
le système de communication est fondé sur un protocole Ethernet.

10. Procédé selon les revendications précédentes,
selon lequel
le système de communication est utilisé pour des applications d'automatisation.

11. Procédé selon les revendications précédentes,
selon lequel
le système de communication est utilisé pour la synchronisation d'un entraînement, pour la régulation d'un entraînement, pour l'émission/sortie de données d'entrée et/ou d'émission et/ou pour des applications de mesure.

12. Utilisation du procédé selon les revendications 1 à 11, pour la communication en temps réel dans un système de communication ayant une dimension prédéfinie de télégramme de données, dimension limitée comme étant la plus grande possible.

13. Programme d'ordinateur comportant un code programme,
selon lequel
le déroulement sur un ordinateur ou un système d'ordinateur permet d'exécuter le procédé selon l'une des revendications 1 à 11.

14. Produit programme d'ordinateur comportant un code programme enregistré sur un support de données lisible par un ordinateur pour exécuter le procédé selon l'une des revendications 1 à 11 lorsque le programme d'ordinateur est appliqué à un ordinateur pour être exécuté.

15. Système d'ordinateur comportant une unité de mémoire dans laquelle est enregistre un programme d'ordinateur avec un code programme et qui lors de son déroulement sur un ordinateur ou un système d'ordinateur permet d'exécuter le procédé selon l'une des revendications 1 à 11.

16. Système de communication comportant plusieurs participants et un système de bus de champ,
selon lequel
les participants communiquent par l'intermédiaire du système de bus de champ à l'aide de télégrammes de données (MDT, MDT0, MDT1, MDT2, MDT3) qui comportent chacun au moins une adresse de destination, une adresse source et un ensemble (M₁, M₁₋₁, Mᵢ, M_{R}) de données utiles (Dₐ, D₁) qui ne peut dépasser un ensemble maximum prédéfini (M₁ M₁₋₁, Mᵢ, M_{R}),
le système de communication comportant une unité de commande qui compare l'ensemble (M₁, M₁₋₁, Mᵢ, M_{R}) de données utiles à transmettre (T0, T1) à l'ensemble maximum (M₁, M₁₋₁, Mᵢ, M_{R}) comportant des données utiles (Dₐ, D₁) pour un télégramme de données (MDT, MDT0, MDT1, MDT2, MDT3), et au cas où l'ensemble (M₁, M₁₋₁, Mᵢ, M_{R}) de données utiles à transmettre (T0; T1) est supérieur à l'ensemble maximum prévu (M₁, M₁₋₁, Mᵢ, M_{R}), l'ensemble (M₁, M₁₋₁, Mᵢ, M_{R}) de données utiles à transmettre (Dₐ, D₁) est fragmenté en plusieurs télégrammes partiels (T0, T1) et il est ainsi réparti et les télégrammes partiels respectifs (T0, T1) sont envoyés successivement,
**caractérisé en ce que**
l'unité de commande sélectionne un premier télégramme partiel (T0, T1) comme télégramme partiel de synchronisation (T0, T1) dans une suite de télégrammes partiels (T0, T1) et
les télégrammes partiels (T0, T1) de la suite des télégrammes partiels (T0, T1) sont envoyés directement les uns après les autres de façon que les télégrammes partiels (T0, T1) pour un participant émetteur et/ou un participant récepteur, apparaissent comme un unique télégramme de données (MDT, MDT0, MDT1, MDT2, MDT3),
l'unité de commande envoyant les différents télégrammes partiels (T0; T1) a des instants d'émission qui se succèdent directement sans intercaler d'autres télégrammes.

17. Système de communication selon la revendication 16,
selon lequel
on distingue les télégrammes partiels respectifs (T0, T1) à l'aide d'une caractéristique de télégramme.

18. Système de communication selon la revendication 16 ou 17,
selon lequel
du côté du participant récepteur, celui-ci filtre automatiquement le télégramme partiel (T0, T1) qui lui est adressé à l'aide d'un décalage enregistré dans le participant.
